# EUROPÄISCHE PATENTANMELDUNG

(11) **EP 1 512 646 A2**
(43) Veröffentlichungstag der Anmeldung: **09.03.2005**
(21) Anmeldenummer: 04090304.9
(22) Anmeldetag: 30.07.2004
(51) Int. Cl.: B65G 17/34

(54) **Fördersystem, insbesondere eine Flughafengepäckförderanlage, für zum Transport von Stückgut dienenden Behältern**

(30) Priorität: 04.09.2003 DE 10340868
(71) Anmelder: SIEMENS AKTIENGESELLSCHAFT, 80333 München (DE)
(72) Erfinder: Brixius, Wolfgang, 91077 Neunkirchen A.Br (DE); Gräfer, Dominik, 44265 Dortmund-Wellinghofen (DE); Hoene, Albrecht Dr., 93138 Lappersdorf (DE)

(57) **Zusammenfassung**

Die Erfindung betrifft ein Fördersystem, insbesondere eine Flughafen-Gepäckförderanlage, und entsprechende Führungsmittel (8a) für zum Transport von Stückgut dienenden Behältern (1a), die von außen angetrieben transportiert werden, wobei an der Förderstrecke Führungsmittel (8a) sowie Be- und Entlademittel vorgesehen sind, die eine Kulisse (15) umfassen, in welche die Bolzen (20) eines am Behälter (1a) drehgelagerten Bolzenrads (18) eingreifen, und dass die Stückgutauflagefläche (16) der Behälter (1a) vom Obertrum (17a) eines vom Bolzenrad (18) angetriebenen, quer zur Transportrichtung endlos umlaufenden Fördergurts (17) gebildet ist. Um einen geräuschund verschleißarmen Betrieb zu ermöglichen, wird vorgeschlagen, dass die einzelnen Behälter (1a) entlang einer Förderstrecke mit ihrer Unterseite auf Tragelementen aufliegend transportiert werden und dass in die Unterseiten der Behälter (1a) jeweils zumindest eine in Transportrichtung verlaufende nutförmige Ausnehmung (13a) eingeformt ist, in welche die Führungsmittel (8a) der geraden Förderstreckenabschnitte zumindest an der Be- und Entladestelle eingreifen, die ein sich in Transportrichtung erstreckendes gerades Führungselement (8) aufweisen.

## Beschreibung

Die Erfindung betrifft ein Fördersystem, insbesondere eine Flughafengepäckförderanlage, für zum Transport von Stückgut dienenden Behältern gemäß dem Oberbegriff des Anspruchs 1.

Aus der EP 1227050 A1 ist eine Vorrichtung zur Förderung und Sortierung von Stückgütern bekannt, die entlang einer Förderstrecke in Behältern transportiert werden. Die geführten Behälter werden von außen angetrieben. An Be- und Entladestellen sind entsprechende Be- und Entlademittel vorgesehen, zu denen eine Kulisse gehört, die neben den durchlaufenden Behältern angeordnet ist. In die Kulisse greifen die Bolzen eines am Behälter drehgelagerten Bolzenrads beim Durchlaufen der Behälter ein. Dabei dreht die Kulisse das Bolzenrad, wobei die geradlinige Bewegung des Behälters in eine Drehbewegung des Bolzenrads umgesetzt wird. Das Bolzenrad wiederum treibt einen endlos umlaufenden Fördergurt an, der quer zur Transportrichtung umläuft. Die Stückgüter liegen auf dem Obertrum dieses Fördergurts auf, so dass mit dessen Hilfe eine Be- und Entladung des Behälters je nach Umlaufrichtung durchführbar ist. Durch Verschwenken der Kulisse kann die Beund Entladefunktion zu- bzw. abgeschaltet werden.

Weiter ist aus der DE 197 07 321 A1 eine Förderbahn für Behälter bekannt, bei der die Behälter entlang der Förderbahn bewegt werden. Zum Bewegen der Behälter werden diese mit Fördergurten angetrieben, die als endlos umlaufende Flachgurte ausgebildet und über Umlenkräder geführt sind. Eine Behälterseite liegt dabei jeweils kraftschlüssig auf einem Fördergut auf; die andere Behälterseite ist über frei drehbare Tragrollen abgestützt. Zur Führung der Behälter dient eine Führungsschiene, die jeweils mit einem an der Unterseite der Behälter vorgesehenen stiftförmigen Führungselement zusammenwirkt. Das Führungselement ist in der Führungsschiene geführt und verhindert zusätzlich ein Abheben der Behälter von der Förderbahn. Die Führung erfolgt mittels zweier in Transportrichtung verlaufender Längsseiten der Führungsschiene, wobei auch die Querbewegung der Behälter verhindert wird.

Ferner ist aus der US 2002/0063037 Al bereits ein Fördersystem für den Transport von Behältern bekannt, die Stückgut in Form von Gepäckstücken entlang einer Förderstrecke transportieren. Die Förderstrecke weist eine Vielzahl von geraden Abschnitten auf, wobei die Behälter mit ihrer Unterseite beidseitig auf Gurtförderern aufliegen. Dabei erfahren die Behälter mittels Seitenwänden eine Ausrichtung und Führung. Letzteres hat den Nachteil, dass keine kontrolliert sichere Führung der Behälter sichergestellt ist.

Die Aufgabe der Erfindung ist es, ein Fördersystem und für dieses Fördersystem geeignete Führungsmittel anzugeben, die einen geräusch- und verschleißarmen Betrieb im Zusammenhang mit einer mit Be- und Entladung ermöglichen.

Die Lösung dieser Aufgabe ist durch die im Anspruch 1 angegebenen Merkmale gegeben. Durch die kennzeichnenden Merkmale der Unteransprüche ist das Fördersystem in vorteilhafter Weise weiter ausgestaltet.

Die Lösung sieht vor, dass die einzelnen Behälter entlang einer Förderstrecke mit ihrer Unterseite auf Tragelementen aufliegend transportiert werden und dass in die Unterseiten der Behälter jeweils zumindest eine in Transportrichtung verlaufende nutförmige Ausnehmung eingeformt ist, in welche die Führungsmittel der geraden Förderstreckenabschnitte zumindest an der Be- und Entladestelle eingreifen, die ein sich in Transportrichtung erstreckendes gerades Führungselement aufweisen, wobei die einzelnen Behälter entlang einer Förderstrecke mit ihrer Unterseite von mindestens einem Tragelement transportiert werden. Die Behälter werden also mittels des geraden Führungselements in eine Zwangsführung gebracht, die aufgrund der Führung in Behältermitte geräusch- und verschleißarm ist. Es kommt dabei zu einer harmonischen Bewegung der in die Be- und Entladestation einfahrenden Behälter, da die Kinematik der Be- und Entladestation an die Kinematik der Behälter angepasst ist. Durch die exakte Führung mit geringem Aufwand ist ein Positionieren der Behälter auf der Be- und Entladestation nicht mehr notwendig.

Eine gute Führung wird erzielt, wenn die Länge des geraden Führungselements größer ist als die Länge der Behälter.

Ein hoher Durchsatz wird erzielt, wenn die Kulisse durch Schwenken von außen zuschaltbar ist.

Zweckmäßigerweise ist die Drehachse des Bolzenrades parallel zur Transportrichtung und die Bolzen verlaufen in gleichem radialen Abstand zur Drehachse.

Der Antrieb verbessert sich, wenn das Obertrum vom Bolzenrad mittels eines zwischengeschalteten Stirnradgetriebes angetrieben wird.

Zweckmäßigerweise sind die Steigung und Länge der Kulisse so gewählt, dass der Fördergurt beim Vorbeifahren an der Kulisse mindestens eine halbe Umdrehung ausführt.

Ein einfacher Behältertransport ergibt sich, wenn die Behälter mit ihrer Unterseite unmittelbar auf Gurten aufliegend transportiert werden.

Die Geschmeidigkeit der Führung wird verbessert, wenn sich an den beiden Längsseiten des Führungselements zumindest je ein Seitenführungselement befindet und sich die beiden gegenüberliegenden Nutseitenflächen der Behälter an den Seitenführungselementen abstützen.

Um die Reibung zwischen Führungselement und Behälter weiter zu verringern, wird vorgeschlagen, dass die Seitenführungselemente als an den Nutseitenflächen abrollende Seitenführungsrollen ausgebildet im Führungselement angeordnet sind, wobei sie ein wenig aus den Längsseiten herausragen.

Bei einer gleichmäßigen Führung ist zumindest an einer Längsseite ein in Transportrichtung beabstandetes Paar Seitenführungsrollen angeordnet.

Geringe Reibungen treten auf, wenn das Führungselement aus gleitfähigem Kunststoff besteht.

Eine einfache konstruktive Lösung für den Antrieb der Behälter liegt vor, wenn die Stützelemente die Stützelemente als Seitenholme ausgebildet sind, die beidendig Endstücke aufweisen, in denen Gurtführungsrollen drehgelagert sind, über welche der Fördergurt läuft, der fördernde Teil auf der Oberseite und der rückführende Teil auf der Unterseite des Seitenholms, wobei die Endstücke in die Seitenholme ein- oder aufgeschoben sind.

Die Erfindung wird nachfolgend anhand einer Zeichnung näher beschrieben. Es zeigen:
- Fig. 1: einen Förderer eines geraden Förderstreckenabschnitts eines Fördersystems,
- Fig. 2: ein für den Förderer gemäß Fig. 1 geeigneten Behälter,
- Fig. 3: den Förderer gemäß Fig. 1 mit aufliegendem Behälter mit zugeschalteter Kulisse und
- Fig. 4: einen vergrößerten Ausschnitt des Förderers gemäß Fig. 3 mit abgehobenem Behälteroberteil.

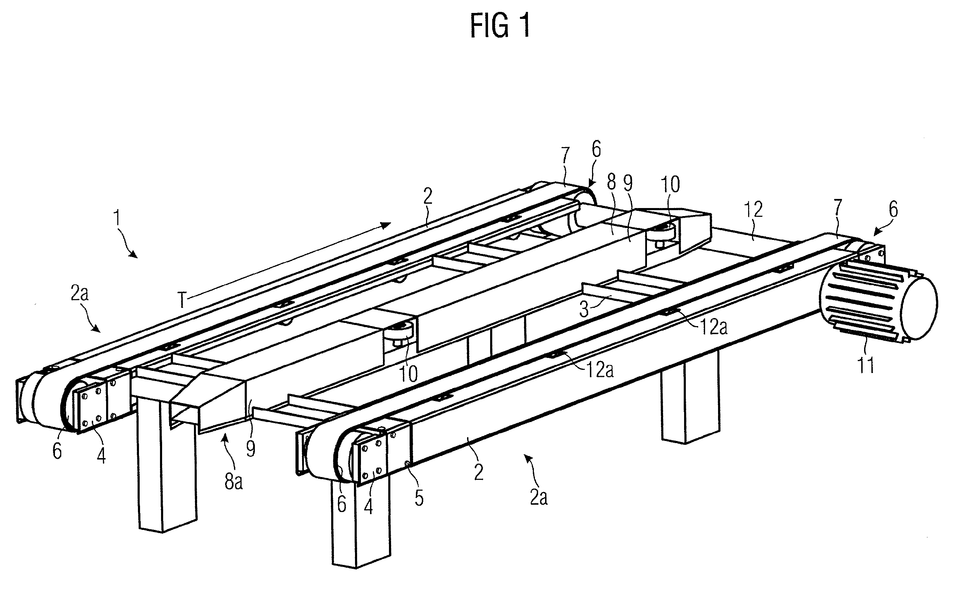

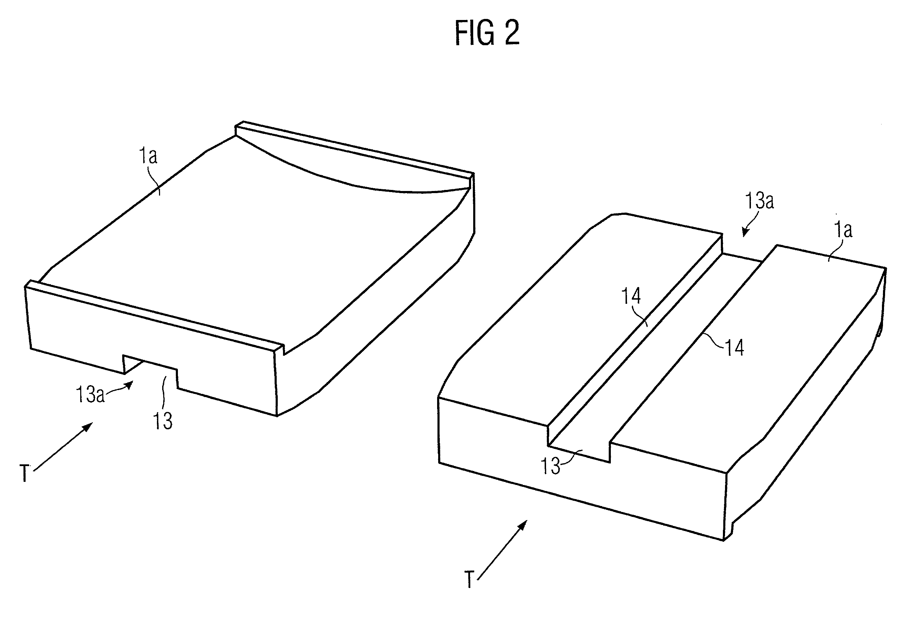

Fig. 1 zeigt einen Förderer 1 eines geraden Förderstreckenabschnitts einer nicht gezeigten Flughafen-Gepäckförderanlage. Die Gepäckförderanlage dient zum Transport von Stückgut, das in Behältern 1a (s. Fig.2) in Transportrichtung T transportiert wird.

Der Förderer 1 weist zwei parallel zueinander angeordnete Seitenholme 2 auf, die über Querträger 3 miteinander verbunden sind. In die beiden bezogen auf Fig. 1 vorderen Enden der Seitenholme 2 ist jeweils ein Endstück 4 eingeschoben bzw. eingesteckt und mittels Schrauben 5 am Seitenholm 2 befestigt. Die mit den Seitenholmen 2 so verbundenen Endstücke 4 bilden jeweils ein Ende der beiden Seitenholme 2.

Die vier Enden der Seitenholme 2 tragen drehgelagerte ballige Gurtführungsrollen 6, über welche jeweils ein endloser Gurt 7 geführt ist. Die Behälter 1a liegen beim Transport mit ihrer flachen Unterseite auf den beiden Gurten 7 auf und werden so von den Seitenholmen 2 abgestützt; sie sind also als Stützelemente 2a wirksam. Der fördernde Teil der Gurte 7 läuft dabei auf der Oberseite und der rückführende Teil auf der Unterseite des Seitenholms 2.

Mittig zwischen den beiden Seitenholmen 2 befindet sich als Führungsmittel 8a ein Führungselement 8, das parallel zu den Seitenholmen 2 in Transportrichtung verläuft. Das Führungselement 8 ist aus gleitfähigen Kunststoff hergestellt, es kann sich aber auch um ein entsprechend geformtes Blech handeln. Das Führungselement 8 hat einen rechteckigen Querschnitt; die Enden verjüngen sich in Transportrichtung gesehen etwas.

Wie Fig. 1 zeigt, ist an den beiden Längsseiten 9 des Führungselements 8 jeweils ein Paar Seitenführungsrollen 10 als Seitenführungselemente vorgesehen (Fig. 1 zeigt nur die beiden dem Betrachter zugewandten vorderen Seitenrollen 10; das hintere Seitenrollenpaar 10, 10 ist in Fig. 1 vom Führungselement 8 verdeckt). Als Seitenführungselemente kommen auch feststehende gleitfähige Elemente in Frage. Die Seitenführungsrollen 10 ragen etwas über die Längsseitenflächen der Längsseiten 9 hinaus. Der Abstand der beiden Seitenführungsrollenpaare 10, 10 entspricht etwa der Behälterlänge. Wie in Fig. 1 schematisch dargestellt, sind die beiden hinteren Gurtführungsrollen 6 von einem Motor angetrieben, von dem nur das Antriebsritzel 11 dargestellt ist. Über das Antriebsritzel 11 wird eine Welle 12 angetrieben, auf der die beiden hinteren Gurtführungsrollen 6 drehfest sitzen. Selbstverständlich können auch die Seitenrollen 10 angetrieben sein und so als Antriebsmittel dienen.

Zur Verringerung des Reibungswiderstands der Gurte 7 sind in den Seitenholmen 2 frei drehbare Stützrollen 12a vorgesehen, auf denen die Gurte 7 aufliegen.

Fig. 2 zeigt den Behälter 1a links mit Blick auf die Oberseite und rechts mit Blick auf die Unterseite. In die Unterseite ist eine in Transportrichtung verlaufende Längsnut 13 mit den beiden gegenüberliegenden Nutseitenflächen 14 als Ausnehmung 13a ausgebildet. Beim Durchlaufen des Förderers 1 greift das Führungselement 8 in die Längsnut 13 ein, wobei die Seitenführungsrollen 10 an den beiden gegenüberliegenden Nutseitenflächen 14 abrollen.

In Fig. 1 sitzen die beiden Rollenpaare 10, 10 in Transportrichtung T gesehen im hinteren Bereich des Führungselements 8. Auf diese Weise wird erreicht, dass ein einlaufender Behälter 1a zunächst vom Führungselement 8 grob ausgerichtet und geführt wird und dass dann mittels der Seitenführungsrollen 10 eine exakte Feinausrichtung erfolgt.

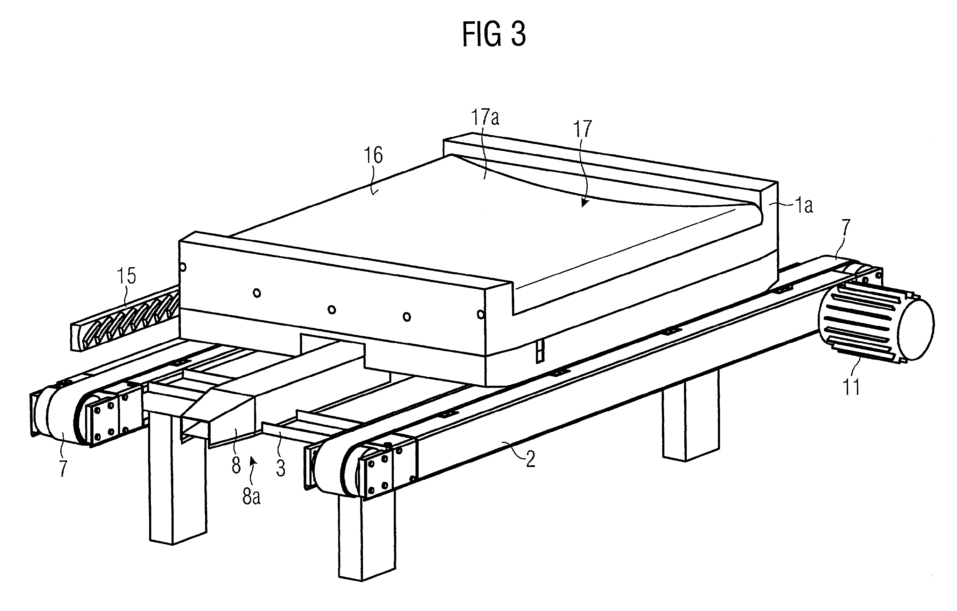

Fig. 3 zeigt einen Förderer 1 mit aufliegendem Behälter 1a und einer gegenüber Fig. 1 von außen zugeschalteten Kulisse 15. Das Zuschalten kann beispielsweise durch Schwenken um eine zur Längserstreckung der Kulisse 15 parallele Schwenkachse erfolgen. Die Kulisse 15 gehört zu Be- und Entlademitteln, wobei sie neben den durchlaufenden Behältern 1a an den Be- und Entladestellen angeordnet ist. Wie Fig. 3 erkennen lässt, ist die Stückgutauflagefläche 16 der Behälter 1a vom Obertrum 17a eines Fördergurts 17 gebildet, der quer zur Transportrichtung endlos umläuft.

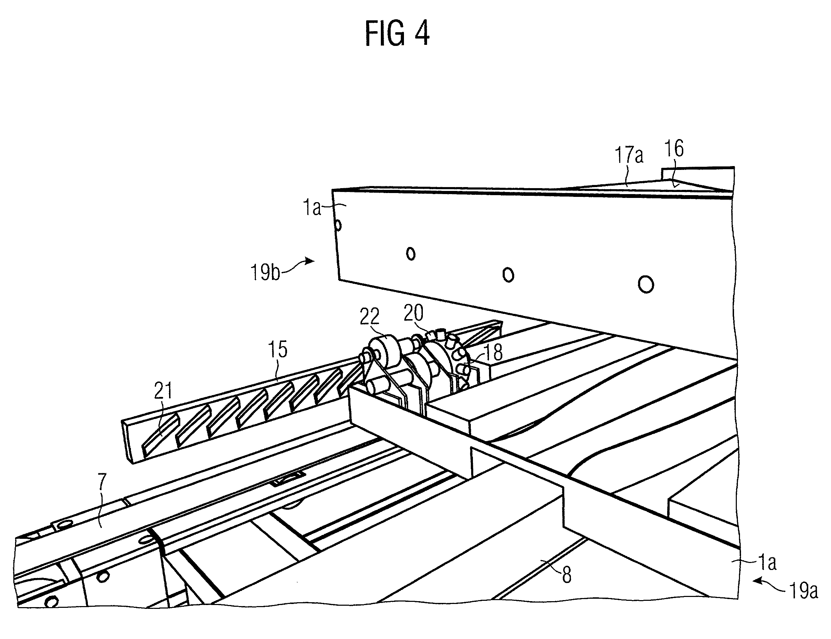

Zum Antrieb des Fördergurts 17 dient ein in Fig. 4 gezeigtes Bolzenrad 18, das am Behälterunterteil 19a drehgelagert ist. Hierzu ist in Fig. 4 der zweiteilig ausgebildete Behälter 1a mit abgehobenem Behälteroberteil 19b - nach Art einer Explosionsdarstellung - gezeigt. (Das Bolzenrad 18 ist in Fig. 2 genauso wie in Fig. 3 vom Behälter verdeckt und wie Fig. 4 zeigt erst bei angehobenem Oberteil 19b zu sehen.) Das Bolzenrad 18 weist mehrere in gleichem Winkelabstand radial zur Drehachse verlaufende Bolzen 20 auf, die mit Stegen 21 der Kulisse 15 derart zusammenwirken, dass die geradlinige Bewegung des Behälters 1a in eine Drehbewegung des Bolzenrades 18 umgesetzt wird. Selbstverständlich wird hierbei nur ein Bruchteil der kinetischen Energie des Behälters 1a in kinetische Energie des vom Bolzenrad 18 angetriebenen Fördergurts 17 umgesetzt, weshalb nahezu keine Geschwindigkeitsänderung des durchlaufenden Behälters 1a eintritt. Beim Zusammenwirken der Bolzen 20 mit den Stegen 21 greifen die Bolzen nacheinander in jeweils eine Vertiefung zwischen zwei unmittelbar benachbarten Stegen 21 ein und werden durch die Bewegung des Behälters 1a nach unten gedrückt. Die Drehachse des Bolzenrades 18 verläuft parallel zur Transportrichtung und ist über ein nicht gezeigtes Stirnradgetriebe mit einem Abtriebsrad 22 verbunden, auf dem das Untertrum des Fördergurts 17 aufliegt. Bei montiertem Behälter 1a findet ein Reibschluss zwischen dem Abtriebsrad 22 und dem Fördergurt 17 statt, so dass eine Drehbewegung des Abtriebsrades 22 den Fördergurt 17 quer zur Transportrichtung bewegt. Die Steigung und die Länge der Kulisse sind so gewählt, dass der Fördergurt 17 beim Vorbeifahren an der zugeschalteten Kulisse 15 mindestens eine halbe Umdrehung ausführt.

### Bezugszeichenliste

- 1: Förderer
- 1a: Behälter
- 2: Seitenholm
- 2a: Stützelement
- 3: Querträger
- 4: Endstück
- 5: Schraube
- 6: Gurtführungsrolle
- 7: Gurt
- 8: Seitenführungselement
- 8a: Führungsmittel
- 9: Längsseite
- 10: Seitenführungsrolle
- 11: Antriebsritzel
- 12: Welle
- 12a: Stützrolle
- 13: Längsnut
- 13a: Ausnehmung
- 14: Nutseitenfläche
- 15: Kulisse
- 16: Stückgutauflagefläche
- 17: Fördergurt
- 17a: Obertrum
- 18: Bolzenrad
- 19a: Behälterunterteil
- 19b: Behälteroberteil
- 20: Bolzen
- 21: Steg
- 22: Antriebsrad

## Patentansprüche

1. Fördersystem, insbesondere eine Flughafen-Gepäckförderanlage, für zum Transport von Stückgut dienenden Behältern (1a),
die entlang einer Förderstrecke von außen angetrieben transportiert werden, wobei an der Förderstrecke Führungsmittel (8a) sowie Be- und Entlademittel vorgesehen sind,
die eine neben den durchlaufenden Behältern (1a) an der Beund Entladestelle vorgesehene Kulisse (15) umfassen, in welche die Bolzen (20) eines am Behälter (1a) drehgelagerten Bolzenrads (18) eingreifen, wobei die Kulisse (15) das Bolzenrad (18) beim Durchlauf der Behälter (1a) unter Ausnutzung seiner kinetischen Energie antreibt, und
dass die Stückgutauflagefläche (16) der Behälter (1a) vom Obertrum (17a) eines vom Bolzenrad (18) angetriebenen, quer zur Transportrichtung endlos umlaufenden Fördergurts (17) gebildet ist, wobei die einzelnen Behälter (1a) entlang einer Förderstrecke mit ihrer Unterseite von mindestens einem Tragelement transportiert werden,
**dadurch gekennzeichnet,**
**dass** in die Unterseiten der Behälter (1a) jeweils zumindest eine in Transportrichtung verlaufende nutförmige Ausnehmung (13a) eingeformt ist, in welche die Führungsmittel (8a) der geraden Förderstreckenabschnitte zumindest an der Be- und Entladestelle eingreifen,
die ein sich in Transportrichtung erstreckendes gerades Führungselement (8) aufweisen.

2. Fördersystem nach Anspruch 1,
**dadurch gekennzeichnet,**
**dass** die Länge des geraden Führungselements (8) größer ist als die Länge der Behälter (1a).

3. Fördersystem nach Anspruch 1 oder 2,
**dadurch gekennzeichnet,**
**dass** die Kulisse (15) durch Schwenken von außen zuschaltbar ist.

4. Fördersystem nach einem der Ansprüche 1 - 3,
**dadurch gekennzeichnet,**
**dass** die Drehachse des Bolzenrads (18) parallel zur Transportrichtung und die Bolzen (20) radial zur Drehachse verlaufen.

5. Fördersystem nach einem der Ansprüche 1 - 4,
**dadurch gekennzeichnet,**
**dass** das Obertrum (17a) vom Bolzenrad (18) mittels eines zwischengeschalteten Stirnradgetriebes angetrieben wird.

6. Fördersystem nach einem der Ansprüche 1 - 5,
**dadurch gekennzeichnet,**
**dass** die Steigung und Länge der Kulisse (15) so gewählt sind, dass der Fördergurt (17) beim Vorbeifahren an der Kulisse (15) mindestens eine halbe Umdrehung ausführt.

7. Fördersystem nach einem der Ansprüche 1 - 6,
**dadurch gekennzeichnet,**
**dass** die Behälter (1a) mit ihrer Unterseite unmittelbar auf Gurten (7) aufliegend transportiert werden.

8. Fördersystem nach einem der Ansprüche 1 - 7,
**dadurch gekennzeichnet,**
**dass** sich an den beiden Längsseiten (9) des Führungselements (8) zumindest je ein Seitenführungselement befindet und sich die beiden gegenüberliegenden Nutseitenflächen (14) der Behälter (1a) an den Seitenführungselementen abstützen.

9. Fördersystem, nach Anspruch 8,
**dadurch gekennzeichnet,**
**dass** die Seitenführungselemente als an den Nutseitenflächen (14) abrollende Seitenführungsrollen (10) ausgebildet und im Führungselement (8) angeordnet sind, wobei sie ein etwas aus den Längsseiten (9) herausragen.

10. Fördersystem nach einem der Ansprüche 8 oder 9,
**dadurch gekennzeichnet,**
**dass** zumindest an einer Längsseite (9) ein in Transportrichtung beabstandetes Paar Seitenführungsrollen (10, 10) angeordnet ist.

11. Fördersystem nach einem der Ansprüche 1 - 10,
**dadurch gekennzeichnet,**
**dass** das Führungselement (8) aus gleitfähigem Kunststoff besteht.

12. Fördersystem nach einem der Ansprüche 1 - 11,
**dadurch gekennzeichnet,**
**dass** die Stützelemente (2a) als Seitenholme (2) ausgebildet sind, die beidendig Endstücke (4) aufweisen, in denen Gurtführungsrollen (6) drehgelagert sind, über welche der Gurt (7) läuft, der fördernde Teil auf der Oberseite und der rückführende Teil auf der Unterseite des Seitenholms (2),
wobei die Endstücke (4) in die Seitenholme (2) ein- oder aufgeschoben sind.
